# EUROPEAN PATENT SPECIFICATION

(11) **EP 2 497 661 B1**
(45) Date of publication and mention of the grant of the patent: **24.04.2013**
(21) Application number: 11157345.7
(22) Date of filing: 08.03.2011
(51) Int. Cl.: B60H 1/00

(54) **A heating and cooling system for vehicle cabins**
Heiz- und Kühlsystem für Fahrzeugkabinen
Système de chauffage et de refroidissement pour cabines de véhicules

(43) Date of publication of application: 12.09.2012
(73) Proprietor: Tofas Turk Otomobil Fabrikasi Anonim Sirketi, 16369 Bursa (TR)
(72) Inventor: Gudu, Turker, 16369, Bursa (TR); Aksoy, Alperen, 16369, Bursa (TR); Kilkis, Birol, 06530, ANKARA (TR); Turan, Rasit, 06531, ANKARA (TR); Aksel, Haluk, 06531, ANKARA (TR); Demircioglu, Olgu, 06531, ANKARA (TR); Ongut, Alp Emre, 06531, ANKARA (TR)
(74) Representative: Dericioglu, Ekin

(56) References cited:
- CN-A- 1 760 606
- DE-B3-102004 011 783
- DE-T2- 60 303 654

## Description

### Field of the Invention

The present invention relates to a cooling and heating system which enables to cool cabins of parked vehicles in open spaces during hot outdoor conditions and especially while under the sun by utilizing solar energy and also to pre-heat the cabin during cold weather within human tolerance limits in terms of comfort requirements.

### Background of the Invention

Today there are some applications which partially use solar energy in order to cool vehicle cabins or support the power supply of the vehicle. Solar power is generated by means of photovoltaic panels which are mounted to the vehicle from the outside or can be laid over the vehicle, during parked position and it provides benefit in terms of various power-consuming systems of vehicles.

Electric power, which is converted from solar power in the state of the art, is aimed to cool the vehicle cabin; supporting battery which meets power demand of the current vehicle air-conditioning systems; or running a smaller capacity dedicated air-conditioning system; running systems which consist of thermoelectric modules that are located in an interior position away from photovoltaic panels and the roof; running fan which is disposed on the window in vehicles having sun-roof; and in similar embodiments.

Radiation mode of heat transfer is not the primary method in the above-mentioned cabin cooling systems. Instead these applications attempt to directly cool the air inside the cabin, which is energy inefficient, via natural or forced convection heat transfer or perform a passive cooling by composing air current by means of fans which are positioned at places such as a sun-roof. It is not possible to completely cool the hot air inside the vehicle, because the surface area of the photovoltaic panel, which will be mounted or laid over the vehicle, is limited. Even assuming that it is possible to completely satisfy cabin cooling by solar energy, it has not been resolved yet how to sink the heat out of the vehicle in an efficient and sustainable manner. In other words, first the effective and continuous heat sinking issue must be engineered and solved, besides the current problems related to limited amount of solar energy and convection of heat transfer mode of existing systems. In addition, these systems are positioned away from photovoltaic panels which are disposed on the roof or another part of the vehicle. Therefore; they cannot have advantages of integrated and co-operation of photovoltaic and thermoelectric modules such as taking the total heat generated out collectively and thus also to cool the photovoltaic panel in order to maintain their peak efficiency.

Removing the heat from the cabin in the above-mentioned cabin cooling-ventilating systems and deliver the heat to a heat sink outside the vehicle, which is a necessary conditions in terms of thermodynamics is not possible or even thought of, except opening the window slightly or taking the air out by means of fans that are mounted over a hole bored on the sunroof. In order to maintain operation of the cooling system in terms of thermodynamics, it is required to release heat, as much as the heat is drawn into the cooling system and transfer the heatto a heat sink, which is located outside the vehicle, for example to the outdoor air. Otherwise, the cooling system will not continuously operate and it will stop after a short time. Therefore, cabin cooling cannot be effective in existing systems. Even though a local cooling is realized at the beginning, the heat which cannot be taken out sufficiently starts accumulating inside the cabin and also within the cooling system itself. Therefore, removal of the heat from the cabin and the cooling system itself becomes the most important technical problem yet to be solved.. No sufficient study and research have been done yet and no successful practice has been attained in the state of the art on this subject matter.

The United States patent document no. US6662572 discloses an air-conditioning system which is realized for a parked vehicle and comprises a solar panel, thermostatic switch, fans and thermoelectric coolers. The solar panel converts solar power to electrical power. The system is convenient for installation and it is removable by including solar panels and is attached to the exterior of a vehicle. A connecting wire provides electrical connection from the panels to a housing that is mounted to a partially opened window on the vehicle. The thermostatic switch, fans and the thermoelectric coolers are included within this housing. The thermostatic switch alternates the direction of the current flow through the thermoelectric coolers to selectively heat or cool the interior of the vehicle. No real solution is offered concerning how to take the heat out in an efficient and sustainable manner in the said document. In addition, radiation is not used for heat transfer in this system and it is only anticipated to heat and cool the air inside the cabin via convection heat transfer. No technical data is submitted concerning how successful the system is.

The United States patent document no. US2006156738 discloses a temperature regulation system which enables to cool the interior of an automobile/motor vehicle below the temperature outside the vehicle when it is parked under the sun. The system is powered by photovoltaic cells. Thus, it is suggested that it is not necessary anymore to spend vehicle's battery. Peltier (thermo-electric modules) elements, heat disposals, and fans of the system are controlled by a power supply in the form of a circuit board. Although the fans seem partially useful in order to take the heat out the cabin efficiently, fans consume energy and decrease efficiency of solar energy, which is already limited, in cooling. No technical data is submitted as to whether how successful this system is, too.

### Summary of the Invention

The objective of the present invention is to accomplish a cooling and heating system which enables to cool and heat cabins of parked vehicles by using all-electronic components by benefiting from solar energy in the most effective way by means of dominantly radiation heat transfer for cooling or heating of surfaces (like human body) rather than air in the vehicle cabin.

Another objective of the present invention is to realize a hybrid and composite cooling and heating system, which enables cabins of parked vehicles in open spaces to be cooled at hot outdoor conditions and especially while under the sun using solar energy and to be heated in cold weather, is composed of integration of thermo-electric and photovoltaic effect, is integrated to cabin roof, performs predominantly radiation-based heat transfer within the vehicle cabin.

Yet another objective of the present invention is to realize a cooling and heating system, which has a sandwiched- multilayer structure and can take the heat out from the cooling surface, the photovoltaic panel and then transfer it to the exterior of the vehicle to a heat sink in an effective way.

A further objective of the present invention is to realize a cooling and heating system, which can be automatically controlled and performance optimized.

A yet further objective of the present invention is to realize a cooling and heating system which minimally employs power-demanding components such as fan or does not employ at all enables the cooling system to operate in a continuous and sustainable manner by developing innovative heat sinks and heat transfer mechanisms with heat pipe and enabling the heat which is drawn from inside of the cabin during cooling to be taken out at sufficient and sustainable capacity continuously without opening a window or a new ventilating duct forming ventilating opening for ventilation by additional fans, opening the roof window slightly that creates safety issues of the parked vehicle against incidents such as theft.

DE 10 2004 001 783 B3 discloses a system according to the preamble of claim 1.

### Detailed Description of the Invention

A cooling and heating system accomplished to fulfill the objectives of the present invention is illustrated in the accompanying figures, in which:

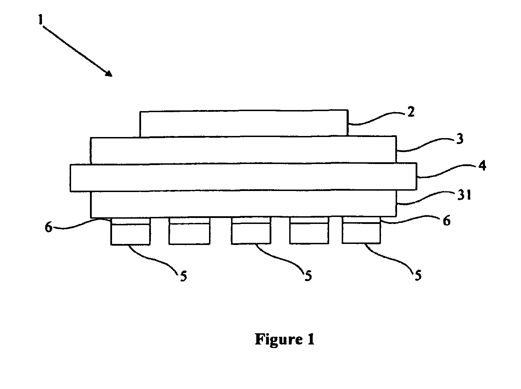

Figure 1 is the basic view of the inventive cooling and heating system.

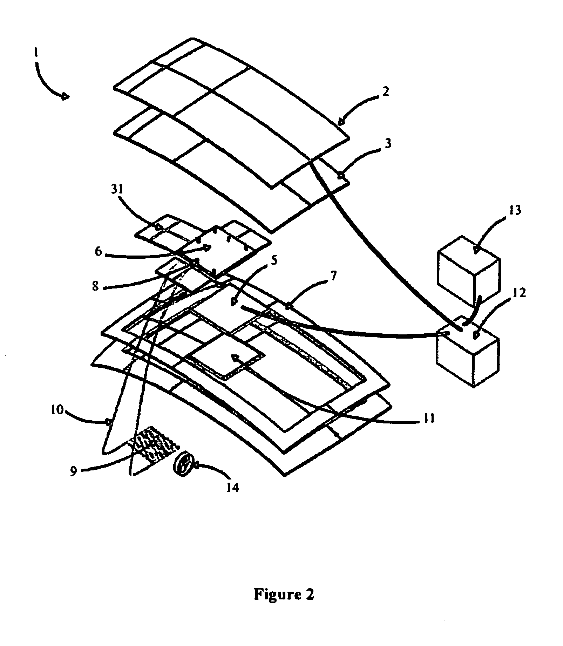

Figure 2 is the view of the inventive cooling and heating system as applied to the vehicle roof.

The components given in the figures are individually numbered where the numbers refer to the following:

| | |
|---|---|
| 1. | Cooling and heating system |
| 2. | Photovoltaic panel |
| 3. | 31,Heat dissipating plate |
| 4. | Insulation layer |
| 5. | Module |
| 6. | Heat conduction sheet |
| 7. | Radiation surface (Heat Sink 1) |
| 8. | Rivet structure |
| 9. | Coil heat pipe (Heat Sink 2) |
| 10. | Heat pipe system |
| 11. | Heat transfer dome |
| 12. | Control unit |
| 13. | Solar battery |
| 14. | Fan |
| R: | Vehicle roof sheet |

The inventive cooling and heating system (1) essentially comprises:
- at least one panel (2) which is integrated to the vehicle roof (R) by being embedded therein and consists of photovoltaic cells that generate direct current electric by solar energy coming over it;
- at least two heat dissipating plates (3,31) which are laid under the photovoltaic panel (2) and enable the photovoltaic panel (2) to be cooled in order that it continues operating at high efficiency;
- at least one insulation element (4) which is laid between the heat dissipating plates (3,31);
- a module (5) one surface of which faces towards the photovoltaic panel (2) and the other one faces towards of the cabin interior, operates by direct-current electric power that is generated by the photovoltaic panel (2) and stored in the solar battery (13), and consists of at least one thermoelectric cooling (TEC) member one surface of which cools and the other one heats depending on the controllable direction of electric current flow.

The inventive cooling and heating system (1) also comprises:
- at least one heat conduction sheet (6) which contacts the rear surface of the module (5) and draws the heat on the rear surface of the module (5);
- at least one radiation surface (Heat Sink 1) (7) whereto the heat that accumulates on the surface of the photovoltaic panel (2) facing the heat dissipating plate (3) and on the rear surface of the thermoelectric module (5) reaches to it by means of heat dissipating plates (3,31), which takes the heat out via natural convection or radiation and is disposed on the roof edges of the vehicle;
- at least one rivet structure (8) which fixes the heat conduction sheet (6) to the radiation surface (7) by means of heat dissipating plates (3,31) and is used for heat conduction to the radiation surface (Heat Sink 1) (7) by means of heat dissipating plates (3,31);
- coil heat pipe (Heat Sink 2) (9) which activates when the radiation surface (Heat Sink 1) (7) remains incapable or does not function depending on external weather conditions, which is disposed on lower edges of the vehicle invisibly and in contact with air;
- at least one heat pipe system (10) which transports the heat to the coil heat pipe (Heat Sink 2) (9) and operates without pump;
- at least one heat transfer dome (11) which faces the vehicle cabin and enhances heat transfer surface of the thermoelectric module (5); and
- at least one control unit (12) which is connected to the photovoltaic panel (2) and the thermoelectric module (5), transmits the electric energy that is generated by the photovoltaic panel (2) to the thermoelectric module (5) such that direction of flow will be appropriate for cab internal cooling or heating, and enables the heating and cooling process to be performed in a controlled manner.

The inventive cooling and heating system (1) also comprises at least one solar battery (13) which is connected to the control unit (12) and enables the unused part of the electric energy that is generated by the photovoltaic panel (2) to be stored. The control unit (12) also enables the solar energy battery (13) to be charged.

In the inventive cooling and heating system (1), there is at least one fan (14) with low energy consumption and thermostat control which can be resorted to use under conditions where taking out the heat occurring in the cabin gets difficult.

In the inventive cooling and heating system (1), the heat dissipating plate (31) transmits the heat to the radiation surface (7) by drawing it from the module (5) by means of the heat conduction sheet (6).

With the rivet structure (8) used in the invention, the thermoelectric module (5) combines with the heat conduction sheet (6) and the heat dissipating plates (3,31).

The radiation surface (7) used in the inventive cooling and heating system (1) preferably has a small, micro-fin structure such that it will not affect the vehicle aerodynamics in a negative way and it is manufactured from a material and coating radiative coefficient of which are high.

The inventive cooling and heating system (1) also comprises at least one locking system (not shown in the figures) which enables to cut off the heat bridge between the heat transfer dome (11) and the radiation surface (7) and the coil heat pipe (9) and the heat pipe system (10) on request. By means of the said locking system, the cabin is prevented from getting cold with external effect when it is desired to increase the temperature inside the cabin in the winter months.

The control unit provided in the inventive cooling and heating system (1) comprises at least one switch which enables to change direction of the flow that is sent to the thermoelectric module (5).

In one position of the switch, surface of the thermoelectric module (5) which faces into the cabin starts to get cold and the surface thereof which faces the photovoltaic panel (2) starts to get heated as a result of the current that is sent to the thermoelectric module (5) by means of the control unit (12). Vehicle cabin cooling is provided at this stage. The said process is carried out especially in the summer months when temperatures are high.

In the other position of the switch, surface of the thermoelectric module (5) which faces the photovoltaic panel (2) starts to get cold and the surface thereof which faces into the cabin starts to get heated as a result of the current which is sent to the thermoelectric module (5) by means of the control unit (12). Vehicle cabin heating is provided at this stage. The said process is carried out especially in the winter months when temperatures are low.

With the inventive cooling and heating system (1), cabin internal temperature are decreased under vital tolerance limits in order that the cabin internal temperature of parked vehicles reach very high values especially in the summer months. The photovoltaic panel (2) which is embedded into the vehicle roof (R) and exposed to sun beams directly converts solar energy coming over it into electric energy. The electric energy obtained is transmitted to the control unit (12) which is connected to the photovoltaic panel (2) and transmitted to the thermoelectric module (5) by means of the photovoltaic panel (2). The current which is transmitted to the thermoelectric module (5) causes the surface of the thermoelectric module (5) facing into the cabin to get cold and the surface thereof facing the photovoltaic panel (2) to get heated. The heat conduction sheet (6) which is connected to the thermoelectric module (5) transmits the heat of the thermoelectric module (5) to the heat dissipating plate (31) whereto it is connected by means of the rivet structure (8) and from there to the radiation surface (7), the coil heat pipe (9) and the heat pipe system (10); thus the cabin internal temperature is decreased by means of radiation mainly by taking the heat out of the vehicle in an efficient and sustainable manner.

With the inventive cooling and heating system (1), cabin internal temperature is increased in order that the cabin internal temperature of parked vehicles does not reach very low values in cold weathers during the winter months. The photovoltaic panel (2) which is embedded into the vehicle roof (R) and over which the sun beams fall converts the solar energy coming over it into electric energy. The electric energy obtained is transmitted to the control unit (12) and to the thermoelectric module (5) or to the battery (13) storing solar energy by means of the control unit (12). The current which is transmitted to the thermoelectric module (5) causes the surface of the thermoelectric module (5) facing the photovoltaic panel (2) to get cold and the surface thereof facing into the cabin to get heated. The heat conduction sheet (6) which is connected to the thermoelectric module (5) cuts off the heat bridge with outside by departing from the thermoelectric module (5) via a mechanism.

The switch, which is provided in the control unit (12) in the inventive cooling and heating system (1), is at different positions during vehicle cabin cooling and heating. Therefore, direction of the flow which is sent to the thermoelectric module (5) by the control unit (12) changes and thus surface of the thermoelectric module (5) which faces into the cabin gets heated in heating mode whereas the surface thereof which faces the photovoltaic panel (2) gets heated in cooling mode. The control unit (12) controls and manages the entire system according to factors such as exterior temperature, cabin internal temperature, amount of solar energy, time elapsing as from vehicle parking, battery charge status. The control unit (12) also enables air circulation inside the cabin to be increased by the vehicle fan (14) activating at appropriate capacities if required.

The battery (13) enables extra electric energy, which is generated by the photovoltaic panel (2) during vehicle cabin heating or cooling, to be stored. In addition, if sufficient electric energy is not generated by the photovoltaic panel (2) during vehicle cabin cooling and heating the battery (13) transmits energy required for heating or cooling process to the thermoelectric module (5) by means of the control unit (12).

The inventive cooling and heating system (1) is embedded into the vehicle roof (R) in an integrated manner such that it will not affect thickness of the roof sheet.

It is possible to develop various embodiments of the inventive cooling and heating system (1). The invention can not be limited to the examples described herein; it is essentially according to the claims.

## Claims

1. A cooling and heating system (1) comprising
- at least one panel (2) which is integrated to the vehicle roof (R) by being embedded therein and consists of photovoltaic cells that generate direct current electric by solar energy coming over it; **characterized by**
- at least two heat dissipating plates (3,31) which are laid under the photovoltaic panel (2) and enable the photovoltaic panel (2) to be cooled in order that it continues operating at high efficiency;
- at least one insulation element (4) which is laid between the heat dissipating plates (3,31);
- a module (5) one surface of which faces towards the photovoltaic panel (2) and the other one faces towards of the cabin interior, operates by direct-current electric power that is generated by the photovoltaic panel (2) and stored in the solar battery (13), and consists of at least one thermoelectric cooling (TEC) member one surface of which cools and the other one heats depending on the controllable direction of electric current flow;
- at least one heat conduction sheet (6) which contacts the rear surface of the module (5) and draws the heat on the rear surface of the module (5);
- at least one radiation surface (Heat Sink 1) (7) whereto the heat that accumulates on the surface of the photovoltaic panel (2) facing the heat dissipating plate (3) and on the rear surface of the thermoelectric module (5) reaches to it by means of heat dissipating plates (3,31), which takes the heat out via natural convection or radiation and is disposed on the roof edges of the vehicle;
- at least one rivet structure (8) which fixes the heat conduction sheet (6) to the radiation surface (7) by means of heat dissipating plates (3,31) and is used for heat conduction to the radiation surface (Heat Sink 1) (7) by means of heat dissipating plates (3,31);
- a coil heat pipe (Heat Sink 2) (9) which activates when the radiation surface (Heat Sink 1) (7) remains incapable or does not function depending on external weather conditions, which is disposed on lower edges of the vehicle invisibly and in contact with air;
- at least one heat pipe system (10) which transports the heat to the coil heat pipe (Heat Sink 2) (9) and operates without pump;
- at least one heat transfer dome (11) which faces the vehicle cabin and enhances heat transfer surface of the thermoelectric module (5); and
- at least one control unit (12) which is connected to the photovoltaic panel (2) and the thermoelectric module (5), transmits the electric energy that is generated by the photovoltaic panel (2) to the thermoelectric module (5) such that direction of flow will be appropriate for cab internal cooling or heating, and enables the heating and cooling process to be performed in a controlled manner.

2. A cooling and heating system (1) according to Claim 1, **characterized by** at least one battery (13) which is connected to the control unit (12) and enables the unused part of the electric energy that is generated by the photovoltaic panel (2) to be stored.

3. A cooling and heating system (1) according to any of the preceding claims, **characterized by** at least one fan (14) with low energy consumption and thermostat control which can be resorted to use under conditions where taking out the heat occurring in the cabin gets difficult.

4. A cooling and heating system (1) according to any of the preceding claims, **characterized by** at least one locking system (not shown in the figures) which enables to cut off the heat bridge between the heat transfer dome (11) and the radiation surface (7) and the coil heat pipe (9) and the heat pipe system (10) on request.

5. A cooling and heating system (1) according to any of the preceding claims, **characterized by** at least one switch which enables to change direction of the flow that is sent to the thermoelectric module (5).

6. A cooling and heating system (1) according to Claim 5, **characterized by** switch which enables to send current in a direction such that the surface of the photovoltaic panel (5) facing into the cabin will be cooled as a result of the current which is sent to the thermoelectric module (5) by means of the control unit (12) in order to cool the vehicle cabin.

7. A cooling and heating system (1) according to Claim 5 or 6, **characterized by** switch which enables to send current in a direction such that the surface of the thermoelectric module (4) facing the photovoltaic panel (2) will be cooled and the surface thereof facing into the cabin will be heated as a result of the current which is sent to the thermoelectric module (5) by means of the control unit (12) in order to heat the vehicle cabin.

## Patentansprüche

1. Eine Kühl-und Heizsystem (1) umfassend,
- mindestens ein Panel (2), das am Fahrzeugdach (R) durch Einbettung darin integriert und aus photovoltaischen Zellen gebildet ist, die durch darauf auffallende Sonnenenergie Gleichstrom erzeugen; **gekennzeichnet durch**
- mindestens zwei ableitende Platten (3, 31), die unter das photovoltaische Panel (2) eingestellt sind und die es ermöglichen dass das photovoltaische Panel (2) gekühlt wird, so dass es mit hoher Leistung weiterarbeitet,
- mindestens ein Isolierelement (4), welches zwischen den wärmeableitenden Platten (3, 31) liegt;
- ein Modul, dessen eine Fläche gegen photovoltaisches Panel (2) und die andere gegen den Innenraum der Fahrzeugkabine gerichtet ist, das **durch** die durch photovoltaisches Panel (2) erzeugte und in der Solarbatterie (13) gespeicherte Gleichstromleistung arbeitet und aus mindestens einem thermoelektrischen Kühlelement (TEC) gebildet ist, dessen eine Fläche kühlt und die andere in Abhängigkeit von der kontrollierbaren Richtung des elektrischen Stromflusses erwärmt;
- mindestens eine Wärmeleitungsplatte (6), welche die Rückfläche des Moduls (5) berührt und die Wärme auf die Rückfläche des Moduls abzieht;
- mindestens eine Strahlungsfläche (Kühlkörper 1) (7), woran sich auf der gegen die wärmeableitende Platte (3) gerichteten Oberfläche des photovoltaischen Panels (2) und auf der Rückfläche des thermoelektrischen Moduls akkumulierende Wärme mit Hilfe der wärmeableitenden Platte (3, 31) gelangt, welche die Wärme über natürliche Konvektion bzw Strahlung entnimmt und auf den Dachkanten des Fahrzeuges angeordnet ist;
- mindestens eine Nietkonstruktion (8), welche die wärmeableitende Platte (6) an die Strahlungsfläche (7) befestigt (3, 31) und bei der Wärmeleitung an die Strahlungsfläche (Kühlkörper 1) (7) **durch** wärmeableitende Platten (3, 31) eingesetzt wird;
- eine Wärme-Rohrschlange (Kühlkörper 2) (9), welche betätigt wird, wenn die Strahlungsfläche (Kühlkörper 1) (7) in Abhängigkeit von äußeren Witterungsverhältnissen unfähig bleibt bzw. nicht funktioniert, welche auf den unteren Randbereichen des Fahrzeuges unsichtbar und in Kontakt mit Luft angeordnet ist;
- mindestens ein Heizrohrsystem (10), welches die Wärme an die Wärmerohrschlange (Kühlkörper 2) (9) befördert und ohne Pumpe betrieben wird;
- mindestens eine Wärmeübertragungs-Dom (111), welcher der Fahrzeugkabine zugewandt ist und die Wärmeübertragung des thermoelektrischen Moduls (5) ermöglicht; und
- mindestens eine Steuereinheit (12), die an das photovoltaische Panel (2) und an das thermoelektrische Modul (5) angeschlossen ist, leitet die **durch** das photovoltaische Panel (2) erzeugte elektrische Energie an das thermoelektrische Modul (5), so dass die Flussrichtung der inneren Kühlung bzw. Heizung der Kabine entspricht und ermöglicht dass der Heiz-bzw. Kühlprozess in einer kontrollierten Weise ausgeführt wird.

2. Ein Kühl- und Heizsystem (1) nach Anspruch 1, **gekennzeichnet durch** mindestens eine Batterie (13), die an die Steuereinheit (12) angeschlossen ist und es ermöglicht, dass der ungenutzte Teil der elektrischen Energie, die **durch** photovoltaisches Panel (2) erzeugt wurde, gespeichert wird.

3. Ein Kühl-und Heizsystem (1) nach einem der vorangehenden Ansprüche, **gekennzeichnet durch** mindestens ein Gebläse (14) mit niedrigem Energieverbrauch und Wärmeregler, welcher dort zur Anwendung umgespeichert werden kann, wo die Wärmeentnahme, die in der Kabine entsteht, erschwert ist.

4. Ein Kühl-und Heizsystem (1) nach einem der vorangehenden Ansprüche, **gekennzeichnet durch** mindestens eine Verschlussvorrichtung (in den Zeichnungen nicht gezeigt), welche es ermöglicht, die Wärmebrücke zwischen dem Wärmeübertragungs-Dom (11) und der Strahlungsfläche (7) und dem Wärmerohrschlange (9) sowie dem Wärmerohrsystem (10) je nach Anforderung abzuschalten.

5. Ein Kühl-und Heizsystem (1) nach einem der vorangehenden Ansprüche, **gekennzeichnet durch** mindestens einen Schalter, welcher die Richtungsänderung des an das thermoelektrische Modul (5) beförderten Flusses ermöglicht.

6. Ein Kühl-und Heizsystem (1) nach Anspruch 5, **gekennzeichnet durch** den Schalter, der es ermöglicht, dass der Strom in einer Richtung geleitet wird, so dass die dem Inneren der Kabine zugewandte Oberfläche des photovoltaischen Panels (5) als ein Ergebnis von dem an das thermoelektrische Modul (5) geleiteten Strom, mit Hilfe der Steuereinheit (12) zur Kühlung der Fahrzeugkabine gekühlt werden soll.

7. Ein Kühl-und Heizsystem (1) nach Anspruch 5 oder 6, **gekennzeichnet durch** den Schalter, der es ermöglicht, dass der Strom in einer Richtung geleitet wird, so dass die dem photovoltaischen Panel (2) zugewandte Oberfläche des thermoelektrischen Moduls (4) gekühlt und dessen dem Inneren der Kabine zugewandte Oberfläche als ein Ergebnis von dem an das thermoelektrische Modul (5) geleiteten Strom, mit Hilfe der Steuereinheit (12) zur Heizung der Fahrzeugkabine erwärmt werden soll.

## Revendications

1. Système de refroidissement et chauffage (1) **comportant**
- au moins un panneau (3) intégré au et enfoncé dans le toit d'un véhicule (R) et étant composé des cellules photovoltaïques générant courant continu électrique par l'énergie solaire y arrivant, **caractérisé par**
- au moins deux plaques dissipatrices de chaleur (3,31) installés sous le panneau photovoltaïque (2) et permettant le refroidissement du panneau photovoltaïque (2) afin qu'il continue son opération avec haute rendement ;
- au moins un élément d'isolation installé (4) entre les plaques dissipatrices de chaleur (3,31) ;
- un module (5) dont une surface fait face vers le panneau photovoltaïque (2) et l'autre fait face vers l'intérieur de la cabine, fonctionnant par le courant continu généré par le panneau photovoltaïque (2) et réservé dans la batterie solaire (13), et consistant en au moins un membre de refroidissement thermoélectrique (MRC) dont une surface rafraîchit et l'autre chauffe en fonction de la direction contrôlable du flux de courant électrique ;
- au moins une feuille conductrice de chaleur entrant en contact avec la surface arrière du module (5) et retirant la chaleur sur la surface arrière du module (5) ;
- au moins une surface de radiation (Dissipateur de Chaleur 1) (7) dans laquelle la chaleurs s'accumule sur la surface du panneau photovoltaïque (2) faisant face à la plaque dissipatrice et atteignant a cette dernière sur la surface arrière du module thermoélectrique (5) au moyen des plaques dissipatrices de chaleur (3,31), retirant la chaleur par convection naturelle ou radiation, et étant disposé sur les bords de toit du véhicule ;
- au moins une structure de rivet (8) fixant la feuille conductrice de chaleur (6) à la surface de radiation (7) au moyen des plaques dissipatrices de chaleurs (3,31) et utilisée pour la conduction de chaleur à la surface de radiation (Dissipateur de Chaleur 1) (7) par les plaques dissipatrices de chaleur (3,31) ;
- un tube de chauffage de bobine (Dissipateur de Chaleur 2) (9) s'activant quand la surface de radiation (Dissipateur de Chaleur 1) (7) reste incapable ou ne fonctionne pas en fonction des conditions climatiques extérieures, disposé sur les bords inférieurs du véhicule dans une maniéré invisible et en contact avec l'air ;
- au moins une coupole de transfert de chaleur (11) faisant face au cabine de véhicule et améliorant la surface conductrice de chaleur du module thermoélectrique (5) ; et
- au moins une unité de control (12) reliée au panneau photovoltaïque (2) et module thermoélectrique (5), transmettant l'énergie électrique générée par panneau photovoltaïque (2) au module thermoélectrique (5) dans une manière que la direction de flux sera appropriée pour le refroidissement ou le chauffage intérieur de la cabine, et permettant la performance du processus de chauffage et refroidissement dans une manière contrôlée.

2. Un système de refroidissement et chauffage selon la revendication 1, **caractérisé par** au moins une batterie (13) reliée à l'unité de control (12) et permettant le stockage de la part inutilisée de l'énergie électrique générée par panneau photovoltaïque (2).

3. Un système de refroidissement et chauffage selon l'une quelconque des revendications précédentes, **caractérisé par** au moins un ventilateur (14) avec une faible consommation d'énergie et le control thermostatique qui peut être restitué à l'utilisation sous les conditions ou l'extraction de la chaleur produit dans la cabine devient difficile.

4. Un système de refroidissement et chauffage selon l'une quelconque des revendications précédentes, **caractérisé par** au moins un système de verrouillage permettant la coupure du pont de chaleur entre la coupole de transfert de chaleur (11) et la surface de radiation (7) et le tube de chauffage de bobine (9) et le système de tube de chaleur (10) sur demande.

5. Un système de refroidissement et chauffage selon l'une quelconque des revendications précédentes, **caractérisé par** un interrupteur permettant le changement de direction de flux envoyé au module thermoélectrique (5).

6. Un système de refroidissement et chauffage (1) selon la revendication 5, **caractérisé par** l'interrupteur permettant l'envoi du courant à une direction dans une manière que la surface du panneau photovoltaïque (5) faisant face à l'intérieur de la cabine sera refroidie en conséquence du courant envoyé au module thermoélectrique (5) au moyen de l'unité de control (12) afin de refroidir la cabine de véhicule.

7. Un système de refroidissement et chauffage (1) selon la revendication 5 ou 6, **caractérisé par** l'interrupteur permettant l'envoie du courant dans une direction dans une manière que la surface du module (4) faisant face au panneau photovoltaïque (2) sera refroidie et sa surface faisant face à l'intérieur sera chauffée en conséquence du courant envoyé au module thermoélectrique au moyen de l'unité de contrôle afin de chauffer la cabine de véhicule.
